# EUROPEAN PATENT SPECIFICATION

(11) **EP 2 183 104 B1**
(45) Date of publication and mention of the grant of the patent: **05.09.2018**
(21) Application number: 08828645.5
(22) Date of filing: 15.07.2008
(51) Int. Cl.: B32B 27/00, B65D 65/40, B65D 77/00

(54) **MULTILAYER FILM HAVING ACTIVE OXYGEN BARRIER LAYER AND IRON-BASED OXYGEN SCAVENGING LAYER**
MEHRSCHICHTIGER FILM MIT AKTIVER SAUERSTOFFSPERRSCHICHT UND EISENBASIERTER SAUERSTOFFABSORPTIONSSCHICHT
FILM MULTICOUCHE COMPORTANT UNE COUCHE DE BARRIÈRE À L'OXYGÈNE ACTIF ET UNE COUCHE DE PIÉGEAGE D'OXYGÈNE À BASE DE FER

(30) Priority: 28.08.2007 US 845944
(43) Date of publication of application: 12.05.2010
(73) Proprietor: Cryovac, Inc., Duncan, SC 29334 (US)
(72) Inventor: BECKWITH, Scott, Greer, SC 29651 (US); EDWARDS, Frank, Bryan, Simpsonville, SC 29681 (US); RIVETT, Janet, Simpsonville, SC 29680 (US); EBNER, Cynthia, Louise, Greer, SC 29650 (US); KENNEDY, Thomas, Simpsonville, SC 29681 (US); MCDOWELL, Rachel, Greensboro, NC 27410 (US); SPEER, Drew, V., Simpsonville, SC 29681 (US)
(74) Representative: J A Kemp
(86) International application number: PCT/US2008/070044
(87) International publication number: WO 2009/029350

(56) References cited:
- EP-A- 1 538 176
- US-A- 5 885 481
- DATABASE WPI Week 200675 Thomson Scientific, London, GB; AN 2006-721856 XP002499346 & JP 2006 282259 A (DAINIPPON PRINTING CO LTD) 19 October 2006 (2006-10-19)
- DATABASE WPI Week 200382 Thomson Scientific, London, GB; AN 2003-881601 XP002499347 & JP 2003 118778 A (TOYO SEIKAN KAISHA LTD) 23 April 2003 (2003-04-23)

## Description

### FIELD OF THE INVENTION

The present invention relates generally to a multilayer film having an active oxygen barrier layer with an oxygen scavenging moiety and more particularly to a multilayer film that maintains high oxygen barrier properties before and after being exposed to retort conditions.

### BACKGROUND OF THE INVENTION

Polymeric films are used in a wide variety of packaging applications, including food packaging, pharmaceutical products and non-perishable consumer goods. Films suitable for each of these applications are typically required to exhibit a range of physical properties. Food packaging films in particular may be required to meet numerous demanding performance criteria, depending on the specific application, such as protection from the environment, resistance to physical and environmental abuse during processing, storage and distribution, and an aesthetic and attractive appearance.

In the case of perishable products, such as oxygen sensitive products, oxygen barrier characteristics are required to provide extended shelf life for the packaged product. Limiting the exposure of oxygen-sensitive products to oxygen maintains and enhances the quality and shelf life of many products. For instance, by limiting the oxygen exposure of oxygen-sensitive food products in a packaging system, the quality of the food product can be maintained and spoilage retarded. In addition, such packaging also keeps the product in inventory longer, thereby reducing costs incurred from waste and having to restock.

In the food packaging industry, several techniques for limiting oxygen exposure have been developed. Common techniques include those where oxygen is consumed within the packaging environment by some means other than the packaged article or the packaging material (e.g., through the use of oxygen scavenging sachets), those where reduced oxygen environments are created in the package (e.g., modified atmosphere packaging (MAP) and vacuum packaging), and those where oxygen is prevented from entering the packaging environment (e.g., barrier films).

Sachets containing oxygen scavenging compositions can contain iron compositions, which oxidize to their ferric state, unsaturated fatty acid salts on an absorbent, ascorbic acid and its salts and/or a metal-polyamide complex. The disadvantages of sachets include the need for additional packaging steps (to add the sachet to the package), the potential for contamination of the packaged article should the sachet break, and the danger of ingestion by a consumer.

Oxygen scavenging materials also have been incorporated directly into the packaging structure. This technique (hereinafter referred to as "active oxygen barrier") can provide a uniform scavenging effect throughout the package and can provide a means of intercepting and scavenging oxygen as it passes through the walls of a package, thereby maintaining the lowest possible oxygen level throughout the package. Active oxygen barriers have been formed by incorporating inorganic powders and/or salts as part of the package. However, incorporation of such powders and/or salts can degrade the transparency and mechanical properties (e.g., tear strength) of the packaging material and can complicate processing, especially where thin films are desired. Also, in some cases these compounds as well as their oxidation products can be absorbed by food in the container, which can result in the food product failing to meet governmental standards for human consumption.

In addition, various films have been developed to help provide oxygen barrier properties to the packaging. For example, ethylene vinyl alcohol copolymer (EVOH) has been known as a good oxygen barrier material, and has been used in the past in conjunction with multilayer packaging films. However, many of these films although providing some level of barrier to oxygen may still permit some oxygen to pass through the film and enter the package. As a result, the film may not provide the desired level of oxygen barrier properties.

Another use of oxygen barrier materials is in retort processes which are commonly employed for pouches and containers in various food applications as well as certain pharmaceutical, medical and health care products. In retort cooking processes, heat and pressure are used to cook food in a sealed package. Retort conditions can be quite demanding with temperatures typically ranging from 250° F to 270° F. Many oxygen barrier polymers including standard EVOH can become damaged at these retort conditions. For example, the layers may be distorted/delaminated, or they may lose their oxygen barrier property during or after retorting due to absorbed moisture. For instance, EVOH may suffer from retort shock in which moisture is trapped in the EVOH layer and can cause a drop in the barrier properties of the EVOH layer.

It would be beneficial to provide a film having high oxygen barrier properties for an extended length of time, and it would also be beneficial to provide a film having high oxygen barrier properties that can be used in retort applications without undesirable reductions in the oxygen barrier properties of the film.

EP 1538176 discloses an oxygen absorption resin composition which may further comprise a gas barrier resin, a compatibilizer and the like. US 5885481 discloses oxygen-scavenging compositions comprising an oxidizable metal component and a solid, halogen-free, acidifying electrolyte component and, optionally, a water-absorbent binder and/or a polymeric resin. JP 2006-282259 describes a gas barrier molding container having a multilayered structure which has an outer layer of a thermoplastic resin, intermediate later of gas-barrier thermoplastic resin and inner layer of thermoplastic resin sequentially laminated from the outer side. JP 2003-118778 describes a pouch for retorts, having laminated layers of an oxygen barrier layer and a cushion layer, wherein the oxygen absorption layer comprises a blend of oxygen absorbent and olefin resin, and a heat sealing layer.

### BRIEF SUMMARY OF THE INVENTION

One aspect of the present invention is directed to a multilayer active oxygen barrier film comprising:
a) at least one active oxygen barrier layer comprising an oxygen scavenging composition that is a blend of:
   (A) a thermoplastic resin having carbon-carbon double bonds substantially in its main chain;
   (B) a transition metal salt; and
   (C) an oxygen barrier polymer, and
b) a layer comprising an iron-based oxygen scavenging composition, wherein the film has an oxygen scavenging rate that is at least 0.01 cc oxygen per day per gram of the oxygen scavenging composition blend.

In some embodiments the active barrier layer may also include a compatibilizer (D).

The multilayer film of the present invention having both the active oxygen barrier layer and the iron-based oxygen scavenging composition provides a film having improved oxygen barrier properties and a higher oxygen absorbing capacity in comparison to a film having only one of either the active oxygen barrier layer or the iron-based oxygen scavenging composition. It has been found in some embodiments that when the oxygen scavenging capacity of the active oxygen barrier composition of the multilayer film is exhausted, the oxygen transmission rate of the multilayered film can increase as much as twice or more compared to a control (e.g., a film having a passive oxygen barrier layer, but no active oxygen barrier layer). When an iron-based oxygen scavenging composition is combined with an active oxygen barrier layer in the multilayer film of the present invention, the increase in oxygen transmission rate upon exhaustion of the capacity of the active oxygen barrier is significantly reduced. As a result, the multilayer film of the present invention provides an active oxygen barrier film having improved oxygen barrier performance and shelf-life. Further, the iron-based oxygen scavenging composition can bind with moisture vapor and thereby help reduce or prevent moisture vapor from accumulating in the active oxygen barrier layer. As a result, the multilayer film may be particularly useful in retort applications.

In one embodiment, the active oxygen barrier layer comprises an oxygen barrier polymer that is blended with an oxygen scavenging moiety. Oxygen barrier polymers that may be used in the active oxygen barrier layer include ethylene vinyl alcohol copolymer (EVOH), polyamide, polyvinyl chloride, polyvinylidene dichloride, polyethylene terephthalate (PET), polyethylene naphthenate (PEN), polyacrylonitrile, and copolymers and combinations thereof. The passive oxygen barrier layers may comprise the same oxygen barrier polymer (C) that is present in the active oxygen barrier layer. In one embodiment, the passive oxygen barrier layers may comprise ethylene vinyl alcohol copolymer (EVOH), polyamide, polyvinyl chloride, polyacrylonitrile, and combinations thereof.

The active oxygen barrier layer includes an oxygen scavenging moiety that intercepts and binds with oxygen molecules passing through the layer. During use, the capacity of the scavenging moiety to bind with oxygen may be reduced or depleted. This may result in the oxygen barrier properties of the active barrier layer being significantly reduced. In some cases, the resulting oxygen barrier properties of the oxygen barrier polymer (C) may be less than a similar film that did not include the oxygen scavenging moiety. As a result, depletion of the capacity of the oxygen scavenging layer may cause the film to perform unsatisfactorily. In the present invention, the presence of the oxygen absorbing iron composition helps to maintain the oxygen barrier properties of the multilayer film after the oxygen binding capacity of the oxygen scavenging moiety has been exhausted. As a result, the useful shelf life of the film can be extended.

The iron-based oxygen scavenging composition generally comprises a mixture of finely divided oxidizable iron particles and a carrier resin. The amount of iron in the carrier resin is generally dependent on several factors including, desired oxygen absorbing capacity and/or oxygen scavenging rate, homogeneity between the carrier resin and the iron particles, optical and strength properties of the film, and the like. In one embodiment, the amount of iron particles is at least 7 weight percent, based on the total weight of the layer in which the iron particles are disposed. In particular, the amount of iron particles may be from about 0.7 to 70 weight percent, and more particularly from about 3.5 to 14 weight percent. The size of the iron particles may include both micron size and nano-sized particles. For example, the size of the iron particles may range from about 5 nanometers to 100 microns. Typically the particle size will range from about 3 to 30 microns. When transparency is desired, it may be useful to use nano-sized particles.

The multilayer film may include at least one or more outer layers. For example, in one embodiment, the multilayer film may include an outer sealant layer and/or an outer abuse layer. The sealant layer includes an outer surface of the multilayer film that is heat sealable polymeric material. In one embodiment, the sealant layer can be sealed to itself or a second film sheet to form a pouch or bag. The outer abuse layer generally forms an outer protective surface of a package that is formed from the multilayer film. In still other embodiments, depending on the desired characteristics of the film, the multilayer film may include one or more intermediate layers, such as adhesive layers, barrier layers, strengthening layers, and the like. For example, in one embodiment, the multilayer film further includes one or more polyamide layers disposed between the active oxygen barrier layer and one or more of the outer layers.

Multilayer films in accordance with the present invention can be used in packaging articles having various forms, such as flexible sheet, films, flexible bags, pouches, thermoformed containers, rigid and semi-rigid containers or combinations thereof. Typical flexible films and bags include those used to package various food items and may be made up of one or a multiplicity of layers to form the overall film or bag-like packaging material.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a cross-sectional side view of a multilayer film that is in accordance with one aspect of the present invention wherein the multilayer film includes an active oxygen barrier layer and a layer having an iron-based oxygen scavenging composition;
FIG. 2 is a cross-sectional side view of a second embodiment of the multilayer film that is in accordance with one aspect of the present invention wherein the multilayer core includes an active oxygen barrier layer, a layer having an iron-based oxygen scavenging composition, and two functional layers that are disposed on opposite sides of the active oxygen barrier layer; and
FIG. 3 is a graph that plots percent O₂ in the interior of pouches as a function of time for various pouches to illustrate the synergistic effect of the multilayer film having an active oxygen barrier layer and a layer having an iron-based oxygen scavenging composition.

### DETAILED DESCRIPTION OF THE INVENTION

One or more embodiments of the present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

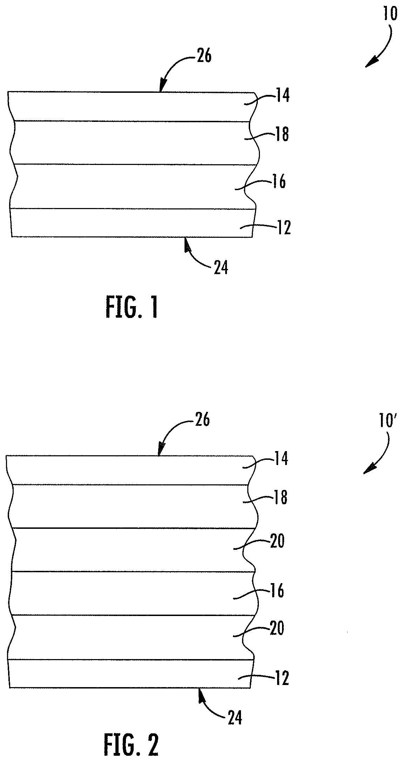

With reference to FIG. 1, a multilayer film having active oxygen barrier properties that is in accordance with one embodiment of the invention is illustrated and broadly designated as reference number **10.** In the embodiment illustrated in FIG. 1, the multilayer film **10** includes a first outer layer **12**, also referred to as a "sealant layer", a second outer layer **14**, also referred to as an "outer abuse layer", an active oxygen barrier layer **16**, and an oxygen barrier layer **18** comprising an iron-based oxygen scavenging composition. In some embodiments, surface **24** of the multilayer film may comprise an inner surface of a package made from the multilayer film, and surface **26** may comprise an outer abuse layer for the package.

Generally, active oxygen barrier layer **16** has an oxygen absorption rate that is at least about 0.01 ml/(g·day), and in particular at least about 0.1 ml/(g·day), and more particularly at least about 0.5 ml/(g·day). The active oxygen barrier layer generally comprises a blend of an oxygen barrier polymer and an oxygen scavenging moiety, such as an oxygen scavenging nylon or EVOH. In one particular embodiment, the active oxygen barrier layer **16** comprises a composition that is a blend of a thermoplastic resin (A) having carbon-carbon double bonds substantially in its main chain, a transition metal salt (B), and an oxygen barrier polymer (C). Compositions comprising the active oxygen barrier layer **16** are discussed in greater detail below.

The active oxygen barrier layer includes an oxygen scavenging moiety that intercepts and binds with oxygen passing through the multilayer film to thereby maintain a low oxygen atmosphere in the interior of a package comprising the multilayer film. Over a period of time however, the capacity of the scavenging moiety to intercept and bind with oxygen may become diminished so that the overall active barrier properties of the layer are diminished. In some cases, the reduction in capacity can result in the active oxygen barrier layer having a significant reduction in oxygen barrier properties, which may result in the film having poor oxygen barrier properties. The presence of one or more iron-based barrier layers in the multilayer film helps to maintain a low oxygen transmission rate through the multilayer film even after the capacity of the active oxygen barrier layer has been exhausted.

As discussed in greater detail below, the iron-based oxygen scavenging composition comprises a mixture of oxidizable iron particles and a polymeric carrier resin. The iron-based oxygen scavenging composition absorbs and is activated by moisture vapor. In some embodiments, the iron-based scavenging composition further includes one or more of an activating particle component, such as a salt, and an acidifying component. Suitable materials may include those described in U.S. Patent Publication Nos. 2005/0202968 A1 and 2006/0208218 A1, and in U.S. Patent Nos. 5,744,056; 5,885,481; 6,369,148; and 6,586,514, and those materials commercially available as Shelf-plus® O₂ from Ciba Specialty Chemicals. The iron-based oxygen barrier layer can be formulated to have active oxygen barrier properties. For example, the iron-based oxygen scavenging composition may have an oxygen absorption rate that is at least about 0.01 ml/(g·day), and in particular an oxygen absorption rate that is at least about 0.1 ml/(g·day), and more particularly at least about 0.5 ml/(g·day) at room temperature and 50% relative humidity.

The multilayer film of the present invention having both the active oxygen barrier layer and the iron-based oxygen scavenging composition provides a film having improved oxygen barrier properties and a higher oxygen absorbing capacity in comparison to a film having only one of either the active oxygen barrier layer or the iron-based oxygen scavenging composition. When an iron-based oxygen scavenging composition of sufficient oxygen scavenging capacity is combined with an active oxygen barrier layer in the multilayer film of the present invention, the increase in oxygen transmission rate upon exhaustion of the capacity of the active oxygen barrier is significantly reduced. In one embodiment, the multilayered film of the present invention will typically show minimal oxygen ingress for a period of time that is about twice that of a similar film that does not include the iron-based barrier composition, and in particular less than 50%.

Further, the performance of the iron-based oxygen scavenging composition may be improved by the presence of moisture vapor or water. Generally, the iron-based oxygen scavenging composition absorbs and is activated by the presence of moisture. This property may provide several advantages, particularly in retort applications. Under retort conditions, the multilayer film is typically exposed to high temperature moisture vapor that ordinarily would destroy or lessen the oxygen barrier and/or oxygen scavenging properties of the active oxygen barrier layer. However, the presence of the iron-based oxygen scavenging composition has been found to help reduce the presence and/or accumulation of moisture/water in the active oxygen barrier layer. As a result, the useful oxygen scavenging properties of the active oxygen barrier layer can be maintained, even under retort conditions. In addition, the iron-based oxygen scavenging composition can absorb moisture vapor ingressing into the film so that the amount of moisture vapor contacting the active oxygen barrier layer is reduced.

In one embodiment, the multilayer film of the present invention has an oxygen permeability of 10 cc·20 µm/(m²·day·atm) or less at 65% RH and 20° C. Unless indicated to the contrary all oxygen permeability rates are measured according to ASTM D-3985. For example, in one particular embodiment, the multilayer film has an oxygen permeability of 1.0 cc·20 µm/(m²·day·atm) or less at 65% RH and 20° C, and more particularly less than 0.1 cc·20 µm/(m·day·atm) or less at 65% RH and 20° C. The multilayer film can also be characterized in terms of its oxygen absorption rate. In one embodiment, the multilayer film has an oxygen absorption rate that is at least about 0.01 ml/(g·day), and in particular an oxygen absorption rate that is at least about 0.1 ml/(g·day), and more particularly at least about 0.5 ml/(g·day).

As discussed above, the combination of the active oxygen barrier layer and iron-based oxygen scavenging composition also results in improvements in the oxygen absorbing capacity of the film. As a result, the useful shelf life of the film and hence, a product packaged in a package comprising the film may be increased. In one embodiment, the multilayer film has an oxygen absorbing capacity that is at least 1 cm³/g, and in particular at least 25 cm³/g. In one embodiment, the multilayer film has an oxygen capacity that can be as low as 5 cm³/g.

Although the exact placement of the layer containing the iron-based oxygen scavenging composition is not critical to the practice of the invention, it may be desirable to position the layer containing the iron-based oxygen scavenging composition (e.g., layer **18** in FIGS. 1 and 2) on the side of the active oxygen barrier layer **16** that is exposed to the highest relative humidity of water activity during use.

In one embodiment, the active oxygen barrier layer may be sandwiched between one or more intermediate layers, such as adhesive layers or functional layers (e.g., additional barrier layers, and/or strengthening layers (also referred to as "inner abuse layers")), that may be disposed between the active oxygen barrier layer **16** and the sealant layer **12** and/or the abuse layer **14.** In this regard, FIG. 2 depicts an alternative embodiment of the multilayer film **10**' in which an active oxygen barrier layer **16** is disposed between functional layers **20.** Functional layers **20** may be the same or different from each other. In one embodiment, functional layers may comprise a polymer that is selected to provide further mechanical properties, barrier properties, or a combination thereof. In one embodiment, the film may include one or more additional functional layers.

In some embodiments, the multilayer film may include one or more layers comprising a material that is a "passive" oxygen barrier. Generally, passive barrier materials have good oxygen barrier properties, but do not chemically react with or absorb any oxygen. Passive oxygen barrier layer(s) typically have an oxygen permeability of 500 cc·20 µm/(m²·day·atm) or less at 65% RH and 20° C.

Generally, the overall thickness of the multilayer film may range from between about 0.5 to 30 mils, and in particular between about 2 to 10 mils, such as from about 3 to 6 mils. The thickness of the active oxygen barrier layer **16** is typically between about 0.05 and 4 mils thick, and in particular between about 0.2 and 2 mil thick.

As discussed in greater detail below, the multilayer film of the present invention can be used in a wide variety of packaging applications, for example in the production of bags, pouches, lidstocks, vacuum packaging, vacuum skin packaging, vertical and horizontal form fill packaging, and the like. In some embodiments, surface **24** of the multilayer film may comprise an inner surface of a package made from the multilayer film, and surface **26** may comprise an outer abuse surface for the package. For example, in one embodiment, the sealant layer comprises a polymeric material that is capable of adhering to another component of a package, such as a tray, one or more additional sheets of film, or to itself to form a package having an interior space in which an oxygen sensitive product can be disposed. In one particular embodiment, surface **24** of the multilayer film **10** can be adhered to itself to form a bag or pouch. In one embodiment, the sealant layer comprises a heat sealable polymeric material.

In general, oxygen barrier materials such as EVOH and polyamides absorb moisture from high humidity or water activity environments, which can lead to reduced barrier properties particularly at high temperatures. Moisture barrier layers can be interposed between the oxygen barrier layer and the surface of the film that is exposed to high moisture to diminish the moisture migration rate into the barrier layer. Additionally, layers that are highly permeable to moisture can be inserted between the oxygen barrier layer and the surface of the film with the lower water activity or relative humidity in order to wick moisture away from the barrier layer. By reducing the moisture uptake into the moisture sensitive oxygen barrier layer and by wicking moisture away from the moisture sensitive oxygen barrier layer, the water activity or relative humidity within the barrier layer will be kept lower and the oxygen barrier properties will be maximized.

### The Active Oxygen Barrier Layer(s)

In one embodiment, the at least one active oxygen barrier layer **16** comprises a composition that is a blend of a thermoplastic resin (A) having carbon-carbon double bonds substantially in its main chain, a transition metal salt (B), and an oxygen barrier polymer (C). In some embodiments, the blend may also include a compatibilizer (D). The oxygen barrier polymer will typically comprise 70 to 99% by weight of the composition, and the thermoplastic resin having carbon-carbon double bonds will typically comprise from about 1 to 30 weight % of the polymeric portion of the composition. When a compatibilizer is used, it generally comprises from about 0.1 to 29 weight % of the total polymeric portion of the composition. Suitable active oxygen barrier compositions are described in greater detail in U.S. Patent Publication Nos. 2006/0281882 and 2005/0153087.

An oxygen barrier polymer is defined herein as having an oxygen permeability of 500 cc·20 µm/(m²·day·atm) or less at 65% RH and 20° C. In one embodiment, the oxygen barrier polymer (C) may be selected from the group consisting of polyvinyl alcohol, ethylene vinyl alcohol copolymer, polyamide, polyvinyl chloride and its copolymers, polyvinylidene dichloride and its copolymers, and polyacrylonitrile and its copolymers.

In one embodiment, the thermoplastic resin (A) comprises at least one of the units represented by formula (I) and formula (II): 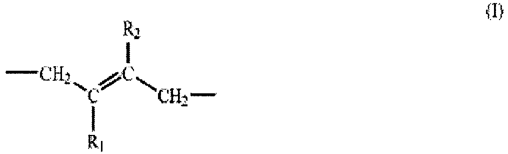 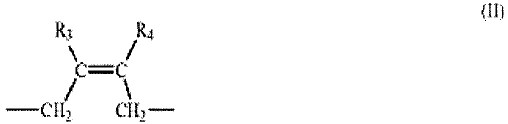 wherein R₁, R₂, R₃ and R₄ are the same or different, a hydrogen atom, an alkyl group that may be substituted, an aryl group that may be substituted, an alkylaryl group that may be substituted, -COOR₅, -OCOR₆, a cyano group or a halogen atom, and R₃ and R₄ may together form a ring via a methylene group or an oxymethylene group, where R₅ and R₆ are an alkyl group that may be substituted, an aryl group that may be substituted or an alkylaryl group that may be substituted. In one embodiment, R₁, R₂, R₃ and R₄ are hydrogen atoms in the formula (I) and formula (II). In some embodiments, the adjacent carbon-carbon double bonds in the thermoplastic resin (A) are separated by at least three methylenes.

In one embodiment, the thermoplastic resin (A) has a unit represented by a 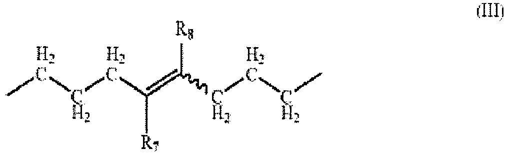 formula (III):
wherein R₇ and R₈ are each independently a hydrogen atom, an alkyl group that may be substituted, an aryl group that may be substituted, an alkylaryl group that may be substituted, -COOR₉, -OCOR₁₀, a cyano group or a halogen atom, and R₉ and R₁₀ are each independently a hydrogen atom, or an alkyl group having 1 to 10 carbon atoms.

In one embodiment, the thermoplastic resin (A) comprises at least one resin selected from the group consisting of polybutadiene, polyisoprene, polychloroprene, polyoctenamer and polyoctenylene, and combinations thereof. In one particular embodiment, the thermoplastic resin (A) is at least one resin selected from the group consisting of polybutadiene and polyoctenylene, and combinations thereof, such as polyoctenylene.

The transition metal salt (B) may include at least one metal salt selected from the group consisting of an iron salt, a nickel salt, a copper salt, a manganese salt and a cobalt salt, and combinations thereof. Counter ions for the transition metal salt may include caproate, 2-ethylhexanoate, neodecanoate, oleate, palmitate and stearate, and combinations thereof. Typically, the amount of transition metal salt (B) that is contained in the composition is present in a ratio of about1 to 50000 ppm in terms of the metal element with respect to the weight of the thermoplastic resin (A). In one embodiment, the transition metal salt (B) is contained in a ratio of about 5 to 10000 ppm, and in particular in a ratio of about 10 to 5000 ppm.

Generally, the oxygen absorption amount of the thermoplastic resin (A) is at least about 1.6 mols per 1 mol of carbon-carbon double bonds of the thermoplastic resin (A). In one embodiment, the oxygen absorption rate of the active oxygen barrier layer is at least about 0.01 ml/(g·day).

In one embodiment, particles of the thermoplastic resin (A) are dispersed in a matrix of the oxygen barrier polymer (C) in the composition. As discussed above, the oxygen barrier polymer (C) generally has an oxygen transmission rate of 500 ml·20 µm/(m²·day·atm) or less in 65% RH at 20° C. In one embodiment, the oxygen barrier polymer may be selected from the group consisting of polyvinyl alcohol, ethylene vinyl alcohol copolymer, polyamide, polyvinyl chloride and its copolymers, polyvinylidene dichloride and its copolymers, and polyacrylonitrile and its copolymers, polyethylene naphthenate and its copolymers, polyethylene terephthalate and its copolymers, and combinations thereof.

In one particular embodiment, the oxygen barrier polymer (C) is ethylene vinyl alcohol copolymer having an ethylene content from 5 to 60 mol% and a degree of saponification of 90% or more. More preferably, the ethylene vinyl alcohol copolymer has an ethylene content between 27 and 60 percent, and in particular from about 30 to 44 mole percent, for example, 32 mole percent. The amount of EVOH copolymer in the core layer is typically between about 70 and 99 weight percent, based on the total weight of the core layer. In one embodiment, the amount of EVOH copolymer is from about 85 to 95 weight percent, and in particular about 90 weight percent, based on the total weight of the active oxygen barrier layer.

Generally, the oxygen barrier polymer (C) is present in an amount of 70 to 99 weight % and the thermoplastic resin (A) is contained in an amount of 1 to 30 wt %, when the total weight of the thermoplastic resin (A) and the oxygen barrier polymer (C) is determined to be 100 weight %.

In some embodiments, the composition comprising the active oxygen barrier layer may further include a compatibilizer (D). An example of a suitable compatibilizer (D) having a polar group is disclosed in detail, for example, in Japanese Laid-Open Patent Publication No. 2002-146217. Among the compatibilizers disclosed in the publication, a styrene-hydrogenated diene block copolymer having a boronic ester group is particularly useful. The above-described compatibilizer (D) can be used alone or in combination of two or more.

In one embodiment, the oxygen barrier polymer (C) is contained in an amount of 70 to 98.9 wt %, the thermoplastic resin (A) is contained in an amount of 1 to 29.9 wt %, and the compatibilizer (D) is contained in an amount of 0.1 to 29 wt %, when the total weight of the thermoplastic resin (A), the oxygen barrier polymer (C) and the compatibilizer (D) is determined to be 100 wt %.

As the compatibilizer (D), ethylene-vinyl alcohol copolymers can also be used. In particular, when the oxygen barrier polymer (C) is EVOH, its effect as the compatibilizer is exhibited sufficiently. Among these, an ethylene-vinyl alcohol copolymer having an ethylene content of 70 to 99 mol % and a degree of saponification of 40% or more improves the compatibility. The ethylene content is in other embodiments 72 to 96 mol %, or 72 to 94 mol %. When the ethylene content is less than 70 mol %, the affinity with the thermoplastic resin (A) may be deteriorated. When the ethylene content is more than 99 mol %, the affinity with the EVOH may be deteriorated. Furthermore, the degree of saponification is e.g. 45% or more. There is no limitation regarding the upper limit of the degree of saponification, and an ethylene-vinyl alcohol copolymer having a degree of saponification of substantially 100% can be used. When the degree of saponification is less than 40%, the affinity with the EVOH may be deteriorated.

When the oxygen absorption resin composition of the present invention contains the oxygen barrier polymer (C) and the compatibilizer (D) as resin components, in addition to the thermoplastic resin (A), it is preferable that the thermoplastic resin (A) is contained in a ratio of 1 to 29.9 weight %, the oxygen barrier polymer (C) is contained in a ratio of 70 to 98.9 weight %, and the compatibilizer (D) is contained in a ratio of 0.1 to 29 weight %, when the total weight of the thermoplastic resin (A), the oxygen barrier polymer (C) and the compatibilizer (D) is 100 weight %. If the content of the oxygen barrier polymer (C) is less than 70 weight %, the gas barrier properties of the resin composition with respect to oxygen gas or carbon dioxide gas may deteriorate. On the other hand, if the content of the oxygen barrier polymer (C) is more than 98.9 weight %, the content of the thermoplastic resin (A) and the compatibilizer (D) is small, so that the oxygen scavenging function may deteriorate, and the stability of the morphology of the entire resin composition may be impaired. In one embodiment, the content of the thermoplastic resin (A) is more than about 2 to 19.5 weight %, and in particular from about 3 to 14 weight %. The content of the oxygen barrier polymer (C) is generally from about 80 to 97.5 wt %, and in particular from about 85 to 96 wt %. The content of the compatibilizer (D) is typically about 0.5 to 18 weight %, and in particular from about 1 to 12 weight %.

In some embodiments, the active oxygen barrier layer can contain an antioxidant. Sutiable antioxidants may include 2,5-di-tert-butylhydroquinone, 2,6-di-tert-butyl-p-cresol, 4,4,'-thiobis(6-tert-butylphenol), 2,2'-methylene-bis(4-methyl-6-tert-butylphenol), octadecyl-3-(3',5'-di-tert-butyl-4'-hydroxyphenyl)propionate, 4,4'-thiobis(6-tert-butylphenol), 2-tert-butyl-6-(3-tert-butyl-2-hydroxy-5-methylbenzyl)-4-methylphenylacrylate, pentaerythritoltetrakis(3-laurylthiopropionate), 2,6-di-(tert-butyl)-4-methylphenol (BHT), 2,2-methylenebis(6-tert-butyl-p-cresol), triphenyl phosphite, tris(nonylphenyl) phosphite, dilauryl thiodipropionate, or the like.

The amount of the antioxidant to be present in the active oxygen barrier composition is readily determined through experimentation as appropriate, in view of the kinds and the contents of components of the resin composition, and the use and the storage conditions of the resin composition, and the like. In general, the amount of the antioxidant is typically from about 0.01 to 1% by weight, and in particular from about 0.02 to 0.5% by weight, based on the total weight of the active oxygen barrier composition. If the amount of the antioxidant is too small, the reaction with oxygen may proceed extensively during storage or melt-kneading of the active oxygen barrier composition, so that the oxygen scavenging function may be lowered before the resin composition of the present invention is actually put to use. If the amount of the antioxidant is large, the reaction of the active oxygen barrier composition with oxygen can be inhibited, so that the oxygen scavenging function of the resin composition of the present invention will not be immediately active upon manufacture. In such cases, it may be desirable to further incorporate a photoinitiator into the composition and activate the composition at a later point in time with actinic radiation. Suitable photoinitiators and methods of triggering using actinic radiation are disclosed in U.S. Patent Nos. 5,211,875; 6,139,770; 6,254,802; and 7,153,891.

Other polymeric compositions that may be used in the active oxygen barrier layer may include barrier polymers having an unsaturated organic moiety blended therein, such as nylons including both amorphous and semi-crystalline nylons.

The active oxygen barrier layer may have a thickness ranging from about 0.05 to about 4.0 mils; from about 0.1 to about 2 mils; from about 0.5 to about 1.5 mils, and from about 0.7 to about 1.3 mils. Further, the thickness of the active oxygen barrier layer(s) as a percentage of the total thickness of the multilayer film may range from about 1 to about 25 percent, from about 5 to about 20 percent, and from about 10 to about 15 percent. The active oxygen barrier layer(s) may have a thickness relative to the thickness of the multilayer film of at least about any of the following values: 1%, 2%, 3%, 4%, 5%, 8%, 10%, 15%, 20%, 25%, and 35%.

### Iron-Based Oxygen Scavenging Composition

As discussed above, the multilayer film includes at least one layer containing an iron-based oxygen scavenging composition. In one embodiment, the layer containing an iron-based oxygen scavenging composition is separate and distinct from the active oxygen barrier layer. In other embodiments, the iron-based oxygen scavenging composition and the active oxygen barrier layer may comprise a single layer within the multilayer film. The iron-based scavenging composition may have an oxygen absorption rate that is at least about 0.01 ml/(g·day), and in particular at least about 0.1 ml/(g·day), and more particularly, from about 0.5 ml/(g·day).

The iron-based scavenging composition generally comprises a mixture of finely divided oxidizable iron particles and a carrier resin. The amount of iron in the carrier resin is generally depended on several factors including, desired oxygen absorbing capacity and/or oxygen scavenging rate, homogeneity between the carrier resin and the iron particles, optical and strength properties of the film, and the like. In one embodiment, the amount of iron particles is at least 7 weight percent, based on the total weight of the layer in which the iron particles are disposed. In one particular embodiment, the amount of iron particles is from about 0.7 to 70 weight percent, and more particularly from about 3.5 to 14 weight percent. The size of the iron particles may include both micron size and nano-sized particles. For example, the size of the iron particles may range from about 5 nanometers to 100 microns, and in particular, from about 1 to 50 microns, and more particularly from about 1 to 15 microns.

A wide variety of different carrier resins may be used for the iron scavenging composition in the practice of the present invention. Suitable carrier resins include polyolefins, such as polyethylenes and polypropylenes, polyamides, polyesters, such as polyethylene terephthalate, polytrimethylene terephthalate, polybutylene terephthalate, polyethylene naphthalate, polybutylene naphthalate, polytrimethylene naphthalate, and combinations thereof.

In some embodiments, the iron-based scavenging composition may also include additives, such as activating agents including electrolytes, such as NaCl, MgCl₂, and CaCl₂, and the like; acidifying agents, such as oxyacid salts, metal halides, alkali or alkaline earth metal hydroxides, and the like. Various additives for iron based scavenging compositions and films comprising such additives are discussed in greater detail in U.S. Patent Nos. 4,192,773, 4,711,741, 5,928,560, 6,666,988, 6,899,822, 5,744,056, 5,885,481, 6,369,148, 6,586,514 and 6,899,822, and in U.S. Patent publications 2005/0202968 and 2006/0208218 A1.

The layer containing the iron-based oxygen scavenging composition may have a thickness ranging from about 0.05 to about 4.0 mils; from about 0.1 to about 2 mils; from about 0.5 to about 1.5 mils, and from about 0.7 to about 1.3 mils. Further, the thickness of the layer(s) as a percentage of the total thickness of the multilayer film may range from about 1 to about 90 percent, from about 5 to about 50 percent, and from about 10 to about 20 percent. The layer containing the iron-based oxygen scavenging composition may have a thickness relative to the thickness of the multilayer film of at least about any of the following values: 1%, 2%, 3%, 4%, 5%, 8%, 10%, 15%, 20%, 25%, 35%, 50%, 60%, 70%, 80%, and 90%.

### The Passive Oxygen Barrier Layer(s)

As discussed above, the multilayer film may also include one or more passive oxygen barrier layers. Passive oxygen barrier layers generally comprise a polymeric material that is a "passive" oxygen barrier. Oxygen barrier polymers that may be used in the passive oxygen barrier layer(s) typically comprises an oxygen barrier polymer having an oxygen permeability of 500 cc·20 µm/(m²·day·atm) or less at 65% RH and 20° C. In one embodiment, the passive oxygen barrier layer(s) have a permeance to oxygen of no more than about 5.8x10⁻⁸cm³/m²·s·Pa (i.e., about 500 cm³/m²·24 hours·atm), such as no more than 1.06 x10⁻⁸cm³/m²-s-Pa (i.e., 100 cm³/m²·24 hours·atm), such as no more than 0.58 x10⁻⁸cm³/m²·s·Pa (i.e., 50 cm³/m²-24 hours-atm) at 25° C. In one embodiment, the multilayer film may include two or more passive oxygen barrier layers that may be the same or different from each other. Additionally, the oxygen barrier layers may comprise an oxygen barrier polymer that is the same or different from the oxygen barrier polymer (C) of the active oxygen barrier layer **16.** In one embodiment, the passive oxygen barrier polymer may be selected from the group consisting of polyvinyl alcohol, ethylene vinyl alcohol copolymer, polyamide, polyvinyl chloride and its copolymers, polyvinylidene dichloride and its copolymers, and polyacrylonitrile and its copolymers. Other suitable polymers may include poly(vinyl alcohol) (PVOH), polyethylene terephthalate (PET), polyethylene naphthalate (PEN), and polyamides such as polycaprolactam (nylon 6), metaxylylene adipamide (MXD6), MXD6/MXDI and copolyamides based on m-xylylenediamine, hexamethylene adipamide (nylon 66), amorphous polyamides such as nylon 6I,6T, as well as various amide copolymers and various blends of the above. Additional oxygen barriers include metal foil layers, metal coatings, depositions of metal, metal oxides such as silica (SiOₓ), alumina, nano clays and vermiculite can also provide oxygen barrier properties.

The active oxygen barrier, the layer containing the iron-based oxygen scavenging composition, and the passive oxygen barrier layer(s) may also include one or more additional ingredients such as a compatibilizer, antioxidants, heat stabilizers and the like.

The multilayer film may also include one or more additional layers such as moisture barrier layer(s), inner abuse or strengthening layer(s), and adhesive or tie layer(s), although the multilayer film may have a composition such that tie layers are not incorporated in the film. The adhesive layers, if present, may comprise ionomers, EVA; EMA; EAO's, including heterogeneous and homogeneous; polyethylene homopolymer; and chemically modified versions of the aforementioned materials, for example, compositions grafted with maleic anhydride, and combinations thereof. The number, orientation, and type of layers in the multilayer film may be varied to provide a film having desired properties, for example, strength, modulus, abuse resistance, optical properties, barrier properties, and the like.

In addition to providing oxygen barrier properties, the resin comprising the one or more passive oxygen barrier layers can be selected to improve the mechanical properties of the multilayer film, such as abuse resistance, modulus, tensile strength, and the like. For example, in one embodiment, layers 20, 22 may comprise a polyamide or copolyamides, such as nylon 6, nylon 9, nylon 11, nylon 12, nylon 66, nylon 69, nylon 610, nylon 612, nylon 6/12, nylon 6/66, nylon 6/69, nylon 66/610, nylon 66/6, nylon 6T, and nylon 12T, amorphous nylons such as MXD6 (a copolymer of m-xylylenediamine and adipic acid), nylon 6I/6T (e.g., a copolyamide of an aliphatic hexamethylene diamide, and an aromatic isophthalic acid and terephthalic acid), etc.; and blends of any of the above, in any suitable proportions of each blend component. Commercial resins available for each type include: for nylon 6,12: CR 9™, CA 6E™, and CF 6S (Emser), 7024 B™, 7028 B™, and 7128 B™ (Ube), and VESTAMID™ D 12, D 14, and D 16 (Huels); for nylon 12: VESTAMID™ L 1600, L 1700, and L 1801 (Huels), BESNO™ (Atochem), GRILAMID™ TR 55 (Emser), and UBE™ 3024 B (Ube); for nylon 11: BESNO™ (Atochem); for nylon 6,66: ULTRAMID™ C 35 (BASF), and XTRAFORM™ 1539 and 1590 (Allied); for nylon 6,69: GRILON™ CF 62 BSE and XE 3222 (Emser); and for nylon 6,10: ULTRAMID™ S3 and S4 (BASF). An exemplary amorphous nylon is GRIVORY™ G21, which is available from Emser Industries. When present, the total thickness of the polyamide layers may vary widely.

The passive oxygen barrier layer(s) may have a thickness ranging from about 0.05 to about 4.0 mils; from about 0.1 to about 2 mils; from about 0.5 to about 1.5 mils, and from about 0.7 to about 1.3 mils. Further, the thickness of the passive oxygen barrier layer(s) as a percentage of the total thickness of the multilayer film may range from about 1 to about 25 percent, from about 5 to about 20 percent, and from about 10 to about 15 percent. The passive oxygen barrier layer(s) may have a thickness relative to the thickness of the multilayer film of at least about any of the following values: 1%, 2%, 3%, 4%, 5%, 8%, 10%, 15%, 20%, 25%, 35%, 45%, and 50%.

### Outer Layers of the Multilayer Film

As discussed above, the sealant layer may define an inner (i.e., food side) surface **24** of the multilayer film. The sealant layer may comprise a polymeric material (e.g., component or blend of components) that facilitates the heat-sealing of multilayer film **10** to another object, such as a support member or tray, film, or to itself, for example, to form a pouch. The sealant layer generally comprises a polymeric resin or combination of polymeric resins that is heat-sealable to a support member, one or more additional sheets of film, or to itself.

The inner (sealant) and outer (abuse) layers may be similar or different from each other depending on the final film application and may include one or more thermoplastic polymers including polyolefins, polystyrenes, polyurethanes, polyvinyl chlorides, and ionomers provided that the desired permeability of the sealant layer may be maintained. In one embodiment, the sealant and abuse layers comprise a thermoplastic plastomer, such as a plastomer comprising ethylene/alpha-olefin copolymer and having a density of greater than about 0.86 g/cc. In the context of the invention, the term "plastomer" refers to a homogeneous ethylene/alpha-olefin copolymer having a density in the range of from about 0.86 to about 0.93, such as from 0.90 to 0.905.

Useful polyolefins include ethylene homo- and co-polymers and propylene homo- and co-polymers. Ethylene homopolymers may include low density polyethylene ("LDPE") and hyperbranched ethylene polymers that are synthesized with chain walking type catalyst, such as Brookhart catalyst. Ethylene copolymers include ethylene/alpha-olefin copolymers ("EAOs"), ethylene/unsaturated ester copolymers, and ethylene/unsaturated acid copolymers. ("Copolymer" as used in this application means a polymer derived from two or more types of monomers, and includes terpolymers, etc.).

EAOs are copolymers of ethylene and one or more alpha-olefins, the copolymer having ethylene as the majority mole-percentage content. In some embodiments, the comonomer includes one or more C₃-C₂₀ alpha-olefins, e.g. C₄-C₁₂ or C₄-C₈ alpha-olefins. Particularly useful alpha-olefins include 1-butene, 1-hexene, 1-octene, and mixtures thereof.

EAOs include one or more of the following: 1) medium density polyethylene ("MDPE"), for example having a density of from 0.93 to 0.94 g/cm³; 2) linear medium density polyethylene ("LMDPE"), for example having a density of from 0.926 to 0.94 g/cm³; 3) linear low density polyethylene ("LLDPE"), for example having a density of from 0.915 to 0.935 g/cm³; 4) very-low or ultra-low density polyethylene ("VLDPE" and "ULDPE"), for example having density below 0.915 g/cm³; and 5) homogeneous EAOs. Useful EAOs include those having a density of less than about any of the following: 0.925, 0.922, 0.92, 0.917, 0.915, 0.912, 0.91, 0.907, 0.905, 0.903, 0.9, and 0.86 grams/cubic centimeter. Unless otherwise indicated, all densities herein are measured according to ASTM D1505.

The polyethylene polymers may be either heterogeneous or homogeneous. As is known in the art, heterogeneous polymers have a relatively wide variation in molecular weight and composition distribution. Heterogeneous polymers may be prepared with, for example, conventional Ziegler Natta catalysts.

On the other hand, homogeneous polymers are typically prepared using metallocene or other single site-type catalysts. Such single-site catalysts typically have only one type of catalytic site, which is believed to be the basis for the homogeneity of the polymers resulting from the polymerization. Homogeneous polymers are structurally different from heterogeneous polymers in that homogeneous polymers exhibit a relatively even sequencing of comonomers within a chain, a mirroring of sequence distribution in all chains, and a similarity of length of all chains. As a result, homogeneous polymers have relatively narrow molecular weight and composition distributions. Examples of homogeneous polymers include the metallocene-catalyzed linear homogeneous ethylene/alpha-olefin copolymer resins available from the Exxon Chemical Company (Baytown, TX) under the EXACT trademark, linear homogeneous ethylene/alpha-olefin copolymer resins available from the Mitsui Petrochemical Corporation under the TAFMER trademark, and long-chain branched, metallocene-catalyzed homogeneous ethylene/alpha-olefin copolymer resins available from the Dow Chemical Company under the AFFINITY trademark.

More particularly, homogeneous ethylene/alpha-olefin copolymers may be characterized by one or more methods known to those of skill in the art, such as molecular weight distribution (M_{w}/Mₙ), composition distribution breadth index (CDBI), narrow melting point range, and single melt point behavior. The molecular weight distribution (M_{w}/Mₙ), also known as "polydispersity," may be determined by gel permeation chromatography. Homogeneous ethylene/alpha-olefin copolymers which can be used in the present invention generally have an M_{w}/Mₙ of less than 2.7; more preferably from about 1.9 to 2.5; still more preferably, from about 1.9 to 2.3 (in contrast heterogeneous ethylene/alpha-olefin copolymers generally have a M_{w}/Mₙ of at least 3). The composition distribution breadth index (CDBI) of such homogeneous ethylene/alpha-olefin copolymers will generally be greater than about 70 percent. The CDBI is defined as the weight percent of the copolymer molecules-having a comonomer content within 50 percent (i.e., plus or minus 50%) of the median total molar comonomer content. The CDBI of linear ethylene homopolymer is defined to be 100%. The Composition Distribution Breadth Index (CDBI) is determined via the technique of Temperature Rising Elution Fractionation (TREF). CDBI determination may be used to distinguish homogeneous copolymers (i.e., narrow composition distribution as assessed by CDBI values generally above 70%) from VLDPEs available commercially which generally have a broad composition distribution as assessed by CDBI values generally less than 55%. TREF data and calculations therefrom for determination of CDBI of a copolymer may be calculated from data obtained from techniques known in the art, such as, for example, temperature rising elution fractionation as described, for example, in Wild et. al., J. Poly. Sci. Poly. Phys. Ed., Vol. 20, p.441 (1982). Preferably, homogeneous ethylene/alpha-olefin copolymers have a CDBI greater than about 70%, i.e., a CDBI of from about 70% to 99%. In general, homogeneous ethylene/alpha-olefin copolymers useful in the present invention also exhibit a relatively narrow melting point range, in comparison with "heterogeneous copolymers", i.e., polymers having a CDBI of less than 55%. In some embodiments, the homogeneous ethylene/alpha-olefin copolymers exhibit an essentially singular melting point characteristic, with a peak melting point (Tₘ), as determined by Differential Scanning Calorimetry (DSC), of from about 60° C to 105° C. In one embodiment, the homogeneous copolymer has a DSC peak Tₘ of from about 80° C. to 100° C. As used herein, the phrase "essentially single melting point" means that at least about 80%, by weight, of the material corresponds to a single Tₘ peak at a temperature within the range of from about 60° C to 105° C, and essentially no substantial fraction of the material has a peak melting point in excess of about 115° C, as determined by DSC analysis. DSC measurements are made on a Perkin Elmer System 7 Thermal Analysis System. Melting information reported are second melting data, i.e., the sample is heated at a programmed rate of 10° C/min. to a temperature below its critical range. The sample is then reheated (2nd melting) at a programmed rate of 10° C/min.

A homogeneous ethylene/alpha-olefin copolymer can, in general, be prepared by the copolymerization of ethylene and any one or more alpha-olefin. For example, the alpha-olefin is a C₃-C₂₀ alpha-monoolefin, such as a C₄-C₁₂ or a C₄-C₈ alpha-monoolefin. For example, the alpha-olefin comprises at least one member selected from the group consisting of butene-1, hexene-1, and octene-1, i.e., 1-butene, 1-hexene, and 1-octene, respectively or a blend of hexene-1 and butene-1.

Processes for preparing and using homogeneous polymers are disclosed in U.S. Pat. No. 5,206,075, to HODGSON, Jr., U.S. Pat. No. 5,241,031, to MEHTA, and PCT International Application WO 93/03093. Further details regarding the production and use of homogeneous ethylene/alpha-olefin copolymers are disclosed in PCT International Publication Number WO 90/03414, and PCT International Publication Number WO 93/03093, both of which designate Exxon Chemical Patents, Inc. as the Applicant.

Still another species of homogeneous ethylene/alpha-olefin copolymers is disclosed in U.S. Pat. No. 5,272,236, to LAI, et al., and U.S. Pat. No. 5,278,272, to LAI, et al..

Another useful ethylene copolymer is ethylene/unsaturated ester copolymer, which is the copolymer of ethylene and one or more unsaturated ester monomers. Useful unsaturated esters include: 1) vinyl esters of aliphatic carboxylic acids, where the esters have from 4 to 12 carbon atoms, and 2) alkyl esters of acrylic or methacrylic acid (collectively, "alkyl (meth)acrylate"), where the esters have from 4 to 12 carbon atoms.

Representative examples of the first ("vinyl ester") group of monomers include vinyl acetate, vinyl propionate, vinyl hexanoate, and vinyl 2-ethylhexanoate. The vinyl ester monomer may have from 4 to 8 carbon atoms, from 4 to 6 carbon atoms, from 4 to 5 carbon atoms, and 4 carbon atoms.

Representative examples of the second ("alkyl (meth)acrylate") group of monomers include methyl acrylate, ethyl acrylate, isobutyl acrylate, n-butyl acrylate, hexyl acrylate, and 2-ethylhexyl acrylate, methyl methacrylate, ethyl methacrylate, isobutyl methacrylate, n-butyl methacrylate, hexyl methacrylate, and 2-ethylhexyl methacrylate. The alkyl (meth)acrylate monomer may have from 4 to 8 carbon atoms, from 4 to 6 carbon atoms, and from 4 to 5 carbon atoms.

The unsaturated ester (i.e., vinyl ester or alkyl (meth)acrylate) comonomer content of the ethylene/unsaturated ester copolymer may range from about 3 to about 18 weight %, and from about 8 to about 12 weight %, based on the weight of the copolymer. Useful ethylene contents of the ethylene/unsaturated ester copolymer include the following amounts: at least about 82 weight %, at least about 85 weight %, at least about 88 weight %, no greater than about 97 weight %, no greater than about 93 weight %, and no greater than about 92 weight %, based on the weight of the copolymer.

Representative examples of ethylene/unsaturated ester copolymers include ethylene/methyl acrylate, ethylene/methyl methacrylate, ethylene/ethyl acrylate, ethylene/ethyl methacrylate, ethylene/butyl acrylate, ethylene/2-ethylhexyl methacrylate, and ethylene/vinyl acetate.

Another useful ethylene copolymer is ethylene/unsaturated carboxylic acid copolymer, such as a copolymer of ethylene and acrylic acid or ethylene and methacrylic acid, or both. Also useful are ethylene copolymers comprising unsaturated alkyl esters and unsaturated carboxylic acids.

Useful propylene copolymer includes propylene/ethylene copolymers ("EPC"), which are copolymers of propylene and ethylene having a majority weight % content of propylene, such as those having an ethylene comonomer content of less than 20%, less than 10%, and from about 2% to 6% by weight.

Ionomer is a copolymer of ethylene and an ethylenically unsaturated monocarboxylic acid having the carboxylic acid groups partially neutralized by a metal ion, such as sodium, calcium, magnesim, or zinc. Useful ionomers include those in which sufficient metal ion is present to neutralize from about 15% to about 60% of the acid groups in the ionomer. The carboxylic acid is e.g. "(meth)acrylic acid"--which means acrylic acid and/or methacrylic acid. Useful ionomers include those having at least 50 weight % and preferably at least 80 weight % ethylene units. Useful ionomers also include those having from 1 to 20 weight percent acid units. Useful ionomers are available, for example, from Dupont Corporation (Wilmington, Del.) under the SURLYN trademark.

The sealant and abuse layers may have a composition such that any one or combinations of the above described polymers comprise at least about any of the following weight percent values: 1, 2, 5, 10, 20, 30, 40, 45, 50, 55, 60, 65, 70, 75, 80, 85, 90, 95, and 100% by weight of the respective layer. In some embodiments, the composition of the sealant and abuse layers may be selected to provide a symmetrical film. In other embodiments, the compositions of the sealant and abuse layers may be selected to provide a non-symmetrical film. As noted above, the abuse layer and sealant layers may comprise the same composition or may have a composition that is different from each other. For example, in some embodiments, the sealant layer may comprise a polyethylene while that abuse layer may comprise a nylon or polypropylene.

The thickness of the sealant layer is selected to provide sufficient material to effect a strong heat seal bond, yet not so thick so as to negatively affect the manufacture (i.e., extrusion) of the film, e.g., by lowering the melt strength of the film to an unacceptable level. The thickness of the sealant layer as a percentage of the total thickness of the multilayer film may range (in ascending order of preference) from about 1 to about 25 percent, from about 5 to about 20 percent, and from about 10 to about 15 percent. The sealant layer may have a thickness relative to the thickness of the multilayer film of at least about any of the following values: 5%, 8%, 10%, 15%, 20%, 25%, 35%, 45%, 55%, 75%, and 80%.

Similarly, the thickness of the outer abuse layer is selected to provide sufficient material to provide an outer abuse layer having sufficient strength to withstand rupture, tearing, and the like, yet not so thick so as to negatively affect the manufacture (i.e., extrusion) of the film. The thickness of the abuse layer as a percentage of the total thickness of the multilayer film may range from about 1 to about 25 percent, from about 5 to about 20 percent, and from about 10 to about 15 percent. The abuse layer may have a thickness relative to the thickness of the multilayer film of at least about any of the following values: 5%, 8%, 10%, 15%, 20%, 25%, 35%, 45%, 55%, 75%, and 80%.

The multilayer film having an active oxygen barrier layer and a layer containing an iron-based oxygen scavenging composition may have a wide variety of different configurations and structures. The following film structures represent various embodiments of the multilayer film that are in accordance with the invention.

**Representative Film 1**

| | | | |
|---|---|---|---|
| Abuse layer | Iron-Based | Active Barrier | Sealant Layer |

**Representative Film 2**

| | | | | | |
|---|---|---|---|---|---|
| Abuse layer | Tie | Iron-Based | Active Barrier | Tie | Sealant Layer |

**Representative Film 3**

| | | | | | |
|---|---|---|---|---|---|
| Abuse layer | Iron-Based | Functional Layer | Active Barrier | Functional Layer | Sealant Layer |

**Representative Film 4**

| | | | | | | | |
|---|---|---|---|---|---|---|---|
| Abuse layer | Iron-Based | Tie | Functional Layer | Active Barrier | Functional Layer | Tie | Sealant Layer |

**Representative Film 5**

| | | | | | | |
|---|---|---|---|---|---|---|
| Abuse layer | Tie | Iron-Based | Active Barrier | Tie | Inner Abuse layer | Sealant Layer |

**Representative Film 6**

| | | | | | | |
|---|---|---|---|---|---|---|
| Abuse layer | Tie | Iron-Based | Tie | Active Barrier | Tie | Sealant Layer |

**Representative Film 7**

| | | | | | | | |
|---|---|---|---|---|---|---|---|
| Abuse layer | Tie | Iron-Based | Passive Barrier | Active Barrier | Passive Barrier | Tie | Sealant Layer |

**Representative Film 8**

| | | | |
|---|---|---|---|
| Sealant layer | Iron-Based | Active Barrier | Abuse Layer |

**Representative Film 9**

| | | | | | |
|---|---|---|---|---|---|
| Sealant layer | Tie | Iron-Based | Active Barrier | Tie | Abuse Layer |

**Representative Film 10**

| | | | | | |
|---|---|---|---|---|---|
| Sealant layer | Iron-Based | Functional Layer | Active Barrier | Functional Layer | Abuse Layer |

**Representative Film 11**

| | | | | | | | |
|---|---|---|---|---|---|---|---|
| Sealant layer | Iron-Based | Tie | Functional Layer | Active Barrier | Functional Layer | Tie | Abuse Layer |

**Representative Film 12**

| | | | | | | |
|---|---|---|---|---|---|---|
| Sealant layer | Tie | Iron-Based | Active Barrier | Tie | Inner Abuse layer | Abuse Layer |

**Representative Film 13**

| | | | | | | |
|---|---|---|---|---|---|---|
| Sealant layer | Tie | Iron-Based | Tie | Active Barrier | Tie | Abuse Layer |

**Representative Film 14**

| | | | | | | | |
|---|---|---|---|---|---|---|---|
| Sealant layer | Tie | Iron-Based | Passive Barrier | Active Barrier | Passive Barrier | Tie | Abuse Layer |

In the above representative illustrations, examples of the passive barrier layer include the compositions discussed above such as EVOH, polyamides, such as nylon and amorphous nylon, polyvinyl chloride, polyvinylidene dichloride, polyacrylonitrile, poly(vinyl alcohol), polyethylene terephthalate (PET), polyethylene naphthalate, and copolymers and mixtures thereof. The active barrier layers may include discussions discussed above including oxygen scavenging EVOH and oxygen scavenging nylon. The functional layers may comprise polyamides, such as nylon and amorphous nylon.

In one embodiment, the oxygen scavenging abilities of the active oxygen barrier layer containing the active oxygen barrier composition can be enhanced by exposing it to an ionizing radiation dosage of at least about 2 kiloGray (kGy). In particular, the multilayer film can be irradiated, such as by electron beam or gamma irradiation, at a dosage of between about 10 and 200, and in particular between 15 and 150, more particularly between 20 and 150, and more particularly between 20 and 100 kiloGray. In one embodiment, the multilayer film can be irradiated with an electron dosage that is from about 50 to 100 kiloGray. Other potential sources of radiation include ionizing radiation such as gamma and X-ray. Duration of exposure depends on several factors including, but not limited to, the amount of the active oxygen barrier composition that is present in the core layer, thickness of the layers to be exposed, thickness and opacity of intervening layers, amount of any antioxidant present, and intensity of the radiation source. Irradiated films and methods of irradiating films are discussed in greater detail in commonly assigned copending US Patent Application No. 11/845,846 entitled "MULTILAYER FILM HAVING AN ACTIVE OXYGEN BARRIER LAYER WITH RADIATION ENHANCED ACTIVE BARRIER PROPERTIES", filed August 28, 2007.

When using oxygen scavenging layers or articles, irradiation can occur during or after the layer or article is prepared. If the resulting layer or article is to be used to package an oxygen sensitive product, exposure can be just prior to, during, or after packaging. When irradiation occurs after packaging, the ionizing radiation dose can be used to sterilize the contents of the package and enhance the activity of the barrier composition. A suitable method for sterilizing an article and initiating oxygen scavenging is disclosed in U.S. Patent No. 6,875,400. For best uniformity of radiation, exposure generally occurs at a processing stage where the layer or article is in the form of a flat sheet or tube.

When the method of the present invention is to be used in an active oxygen barrier application, the radiation enhanced oxygen scavenging activity, in combination with the passive oxygen barrier layers, can create an overall oxygen transmission of less than about 1.1x10⁻¹⁰ cm³/m²·s·Pa (1.0 cm³/m²·day·atm) at 25° C. The oxygen scavenging capacity typically is such that this value is not exceeded for at least two days.

After exposure of the active oxygen barrier composition to ionizing radiation, the scavenging composition, layer, or article prepared there from is generally able to scavenge up to its capacity, i.e., the amount of oxygen which the scavenger is capable of consuming before it becomes ineffective. In actual use, the capacity required for a given application can depend on the quantity of oxygen initially present in the package, the rate of oxygen entry into the package in the absence of the scavenging property, and the intended shelf life for the package. When using scavengers that include the composition of the present invention, the capacity can be as low as 1 cm³/g, but can be 60 cm³/g or higher. When such scavengers are in a layer of a film, the layer may have an oxygen capacity of at least about 0.98 cm³/m²per µm thickness (25.0 cm³/m²per mil), and in particular at least about 59 cm³/m² per µm thickness (1500 cm³/m² per mil).

In some embodiments, the multilayer film **10** may also have a heat-shrinkable attribute. In one particular embodiment, the multilayer film **10** may have a free shrink measured at 185° F in at least one direction (i.e., machine or transverse direction), in at least each of two directions (machine and transverse directions), or a total free shrink of at least about any of the following values: 5%, 7%, 10%, 15%, 20%, 30%, 40%, 50%, and 60%.

As is known in the art, the total free shrink is determined by summing the percent free shrink in the machine (longitudinal) direction with the percentage of free shrink in the transverse direction. For example, a film which exhibits 50% free shrink in the transverse direction and 40% free shrink in the machine direction has a total free shrink of 90%.

Unless otherwise indicated, each reference to free shrink in this application means a free shrink determined by measuring the percent dimensional change in a 10 cm x 10 cm specimen when subjected to selected heat (i.e., at a certain temperature exposure) according to ASTM D 2732. Also, a reference herein to the shrink attributes of a film that is a component of a laminate refers to the shrink attributes of the film itself, which can be measured by separating the film from the laminate--for example, by using an appropriate solvent to dissolve the adhesive that bonds the films together to form the laminate. If a heat-shrinkable film is desired, the thus obtained tube or sheet is heated to the orientation temperature, generally comprised between about 80° C and about 125° C, by passing it through a hot air tunnel or an IR oven and stretched mono- or bi-axially. When a round extrusion die is employed, stretching is generally carried out by the trapped bubble technique. In this technique the inner pressure of a gas such as air is used to expand the diameter of the thick tubing obtained from the extrusion to give a larger bubble transversely stretched, and the differential speed of the nip rolls that hold the bubble is used to get the longitudinal stretching. Generally stretching is in a ratio of at least 3 in each direction. Alternatively, when a flat die is used in the extrusion, if a heat-shrinkable film is desired, orientation is carried out by means of a tenter frame. Longitudinal stretching is generally obtained by passing the film on at least two couples of conveying rolls wherein the second set rotates at a speed higher than that of the first set. The transverse orientation is on the other hand obtained by blocking the film side edges by means of a series of clips that travel onto two continuous chains that gradually diverge with the advancing of the film. Alternatively to said sequential stretching, either longitudinal first and then transversal or transversal first and then longitudinal, stretching may also be simultaneous in both directions. In case of stretching by tenter-frame the stretching ratios are generally higher than with the trapped bubble method.

In some embodiments, the multilayer film **10** is transparent (at least in any non-printed regions) so that a packaged food item therein is visible through the film. "Transparent" as used herein means that the material transmits incident light with negligible scattering and little absorption, enabling objects (e.g., packaged food or print) to be seen clearly through the material under typical unaided viewing conditions (i.e., the expected use conditions of the material). In some embodiments, the transparency (i.e., clarity) of any of the multilayer film **10** is at least about any of the following values: 65%, 70%, 75%, 80%, 85%, 90%, and 95% as measured in accordance with ASTM D1746.

In some embodiments, the multilayer film **10** exhibits a Young's modulus sufficient to withstand the expected handling and use conditions. Young's modulus may be measured in accordance with one or more of the following ASTM procedures: D882; D5026; D4065. In one embodiment, the multilayer film **10** may have a Young's modulus of at least about 30,000 psi with a modulus of 45,000 to 200,000 psi or greater. A higher modulus film has an enhanced stiffness, which may help reduce the tendency of the film to stretch when subjected to various processing conditions, such as elevated temperatures, cutting, and the like. As a result, the film may have less of a tendency to distort or become damaged during various packaging procedures, such as those that may be encountered in VFFS or HFFS packaging. Further, it may be helpful in some embodiments that the film **10** has a high modulus at the elevated temperatures that may be present when the film **10** is exposed to heat seal temperatures, for example, during the lidstock sealing or package sealing processes.

The multilayer film of the present invention may be prepared by a process which involves the co-extrusion of a thick tubular shape laminate film (called "tape") which is quenched just under the die, folded by a pair of nip rolls and then heated to a temperature typically comprised between about 105 and about 120° C, and in particular of at least 110° C, and expanded, still at this temperature, by internal air pressure to get the transversal orientation and by a differential speed of the pinch rolls which hold the bubble to provide the longitudinal orientation so as to get a cylindrically-shaped laminate thin film. After being so stretched the film is rapidly cooled to somehow freeze-in the resulting film a latent shrinkability ("trapped bubble" technique).

Alternatively the films according to the present invention can also be prepared by extrusion coating wherein the multilayer tube to be oriented is formed by extruding or co-extruding a first tape (called the primary tape) and then coating said tape with the other layers which are either sequentially extruded or in a single step coextruded thereon.

Still alternatively the film according to the present invention may be prepared by flat co-extrusion or extrusion coating followed, after a quenching step, by the orientation of the extruded film by tenterframe at a temperature generally comprised between about 105° C. and about 120° C.

Multilayer films in accordance with the present invention can be used in packaging articles having various forms. Suitable articles include, but are not limited to, flexible sheet films, flexible bags, rigid containers or combinations thereof. Typical flexible films and bags include those used to package various food items and may be made up of one or a multiplicity of layers to form the overall film or bag-like packaging material.

Articles in the form of flexible films and bags normally have thickness ranging from about 5 to 260 micrometers. Typical rigid or semi-rigid articles include plastic, paper or cardboard containers, such as those utilized for juices, soft drinks, as well as thermoformed trays or cups normally have wall thickness in the range of from 100 to 1000 micrometers. The multilayer film of the present invention can be used as an integral layer or as non-integral layer of a formed packaging article.

Besides packaging articles applicable for food and beverage, packaging for articles for other oxygen-sensitive products can also benefit from the present invention. Such products may include pharmaceuticals, oxygen sensitive medical products, corrodible metals or products, electronic devices and the like.

The following examples are provided for illustrating one or more embodiments of the present invention and should not be construed as limiting the invention.

### EXAMPLES

Multilayer films used in the following examples were prepared via cast coextrusion. Films have a total thickness of about 6 mils. Unless otherwise indicated all percentages are weight percentages. The materials used in the examples are identified below.
LLDPE-1: EXCEED™ 4518PA; an ethylene hexene-1 copolymer, produced by single site catalysis, with a melt index of 4.5 g/10 min (ASTM D-1238) and a density of 0.918 g/cc (ASTM D-1505); purchased from Exxon Mobil of Houston, TX.
LLDPE-3: Dow-Corning MB50-313™, a linear low density polyethylene containing 50% polydimethylsiloxane slip additive. It has a density of 0.94 g/cc.
LDPE-1: LD102.74™ is a low density polyethylene containing slip, antioxidants and antiblock additives with a density of 0.920 g/cc and a melting point of 110°C, obtained from Exxon Mobil of Houston, TX.
LDPE-4: FSU 93E™ is a low density polyethylene based masterbatch containing 9% diatomaceous earth silica and 3.0% erucamide with a melt index of 7.5 g/10 min (ASTM D-1238) and a density of 0.975 g/cc (ASTM D-792); obtained from A. Schulman of Cleveland, OH.
MA-HDPE-1: PX2049™ is an anhydride grafted high density polyethylene resin having a melt index of 4.7 g/10 min. and density of 0.955 g/ml available from Equistar Chemicals, a division of Lyondell.
MA-LLDPE-3: PX 3236™ is an anhydride-grafted linear low density polyethylene having a melt index of 2.0 g/10 min (ASTM D-1238) and a density of 0.921 g/cc (ASTM D-792); purchased from Equistar Chemicals of Chicago, IL.
Nylon 6-2: ULTRAMID™ B40 is a polyamide 6 resin having a density of 1.125 g/cc and a melting point of 220°C available from BASF Corporation.
EVOH-1: XEP-1070™ is the active barrier composition, which contains approximately 90% of an ethylene-vinyl alcohol copolymer containing 32 mol% of ethylene (EVAL F171B) and 10% of the scavenging components "A, B and D" described above, commercially available from Kuraray, Japan.
EVOH-2: EVAL™ L171B is an ethylene-vinyl alcohol copolymer commercially available from Kuraray containing 27% by mole of ethylene and has a melting point of 191°C and a density of 1.20 g/cc.
Iron/VLDPE-1: CIBA® SHELFPLUS® O₂-2400: blend of iron particles at approximately 14% iron in 86% VLDPE-1; purchased from Ciba.

**Control Film 1 (No iron and No Active EVOH)**

| Layer | Gauge (mils) | Component |
|---|---|---|
| 1 | 0.3 | 70% LLDPE-1/26% LDPE-1 /4%LLDPE-3 |
| 2 | 1.20 | 70% LLDPE-1/30% LDPE-1 |
| 3 | 0.42 | MA-LLDPE-3 |
| 4 | 0.66 | Nylon 6-2 |
| 5 | 0.60 | EVOH-5 |
| 6 | 0.72 | Nylon 6-2 |
| 7 | 1.08 | MA-LLDPE-3 |
| 8 | | MA-LLDPE-3 |
| 9 | 1.02 | 70% LLDPE-1/27% LDPE-1 / 3% LDPE-4 |
| | 6.00 mils | |

**Active EVOH Film (Active EVOH Only)**

| Layer | Gauge (mils) | Component |
|---|---|---|
| 1 | 0.3 | 70% LLDPE-1/26% LDPE-1 /4%LLDPE-3 |
| 2 | 1.20 | 70% LLDPE-1/30% LDPE-1 |
| 3 | 1.02 | MA-HDPE-1 |
| 4 | 0.66 | Nylon 6-2 |
| 5 | 0.60 | EVOH-2 |
| 6 | 0.72 | Nylon 6-2 |
| 7 | 0.60 | MA-LLDPE-3 |
| 8 | | MA-LLDPE-3 |
| 9 | 0.90 | 70% LLDPE-1/27% LDPE-1 / 3% LDPE-4 |
| | 6.00 mils | |

**Iron Film (Iron Only Film)**

| Layer | Gauge (mils) | Component |
|---|---|---|
| 1 | 0.3 | 70% LLDPE-1/26% LDPE-1 /4%LLDPE-3 |
| 2 | 1.20 | Iron/ VLDPE-1 |
| 3 | 0.42 | MA-HDPE-1 |
| 4 | 0.66 | Nylon 6-2 |
| 5 | 0.60 | EVOH-5 |
| 6 | 0.72 | Nylon 6-2 |
| 7 | 0.6 | MA-LLDPE-3 |
| 8 | | MA-LLDPE-3 |
| 9 | 0.9 | 70% LLDPE-1/27% LDPE-1 / 3% LDPE-4 |
| | 6.00 mils | |

**Inventive Film (Iron + EVOH-2)**

| Layer | Gauge (mils) | Component |
|---|---|---|
| 1 | 0.3 | 70% LLDPE-1/26% LDPE-1 /4%LLDPE-3 |
| 2 | 1.20 | Iron/ VLDPE-1 |
| 3 | 0.42 | MA-HDPE-1 |
| 4 | 0.66 | Nylon 6-2 |
| 5 | 0.60 | EVOH-2 |
| 6 | 0.72 | Nylon 6-2 |
| 7 | 0.6 | MA-LLDPE-3 |
| 8 | | MA-LLDPE-3 |
| 9 | 0.9 | 70% LLDPE-1/27% LDPE-1 / 3% LDPE-4 |
| | 6.00 mils | |

Handmade pouches (120 mm x 220 mm) were produced using a Vertrod sealer. Pouches were filled with 200 ml of water, and flushed just prior to sealing with 2% oxygen, 98% nitrogen. Initial residual oxygen levels varied from 2.3 to 3.8%. Four samples were prepared from each film.

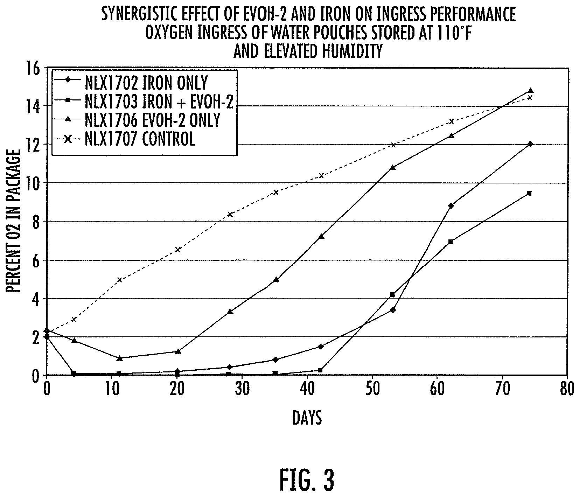

The packages were stored at 100° F and ∼75% relative humidity with Mocon readings being taken periodically. The oxygen level in each pouch was measured immediately after inflation using a Mocon Analyzer (PAC CHECK™ 650, 8 cm³ auto-injection) equipped with a charcoal filter. Unless otherwise stated, the samples were stored at either room temperature or oven conditions. Oxygen data for the interior of the pouches was collected at various intervals in order to determine the amount of oxygen that had ingressed into the pouch over a period of time. This data is reported in Table 1 and shown graphically in FIG. 3.

**Table 1**

| Oxygen Ingress of Pouches Formed from Active Barrier EVOH and Iron Films Stored at 100° F and ∼75% Relative Humidity | | | | | | | | | | |
|---|---|---|---|---|---|---|---|---|---|---|
| **Sample** | **Days** | | | | | | | | | |
| | **0** | **4** | **11** | **20** | **28** | **35** | **42** | **53** | **62** | **74** |
| Control Film | 2.13 | 2.88 | 4.94 | 6.49 | 8.33 | 9.50 | 10.33 | 11.94 | 13.21 | 14.44 |
| Active EVOH Film | 2.34 | 1.80 | 0.86 | 1.17 | 3.27 | 4.91 | 7.20 | 10.79 | 12.50 | 14.85 |
| Iron only Film | 1.95 | 0.07 | 0.08 | 0.19 | 0.42 | 0.78 | 1.46 | 3.36 | 8.81 | 12.10 |
| Inventive Film | 1.97 | 0.06 | 0.00 | 0.00 | 0.00 | 0.00 | 0.16 | 4.13 | 6.90 | 9.40 |

**Table 2**

| Percent Decrease in Oxygen Ingress in Samples after 74 Days | |
|---|---|
| **Sample** | % **Change from Control** |
| Control Film | - |
| Active EVOH Film | -2.86 |
| Iron only Film | 16.19 |
| Inventive Film | 34.87 |

As can be seen in the data in Table 1 and FIG. 3, after aging 74 days, the Active EVOH Film, which contains the active barrier EVOH, lost its active barrier performance after approximately 20 days and is readily beginning to ingress and at this time shows higher ingress (+3%) than the control film, which steadily ingressed from day 1. The Iron Film, which contained only, showed no ingress for about 20 days after which it began to steadily show ingress. The rate of ingress steadily increases as the iron is consumed. This sample showed 16% lower ingress than the Control Film after the 74 day trial. The inventive sample showed no ingress for over 40 days (double the time than that seen for the iron only film,) and after 74 days showed a 35% decrease in ingress versus the Control Film. More than 50% less than the ingress seen with the iron only film.

## Claims

1. A multilayer active oxygen barrier film comprising:
a) at least one active oxygen barrier layer comprising an oxygen scavenging composition that is a blend of:
(A) a thermoplastic resin having carbon-carbon double bonds substantially in its main chain;
(B) a transition metal salt; and
(C) an oxygen barrier polymer, and
b) a layer comprising an iron-based oxygen scavenging composition, wherein the film has an oxygen scavenging rate that is at least 0.01 cc oxygen per day per gram of the oxygen scavenging composition blend.

2. The active oxygen barrier film of Claim 1, wherein the thermoplastic resin (A) comprises at least one of the units represented by formula (I) and formula (II): 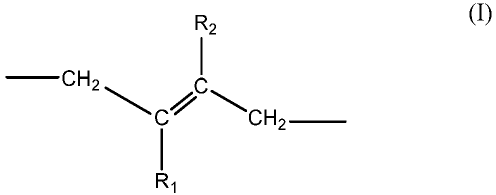 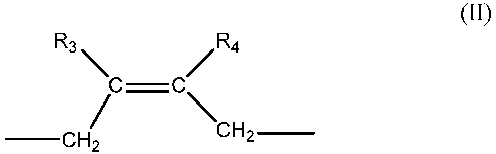 wherein R₁, R₂, R₃ and R₄ are the same or different, a hydrogen atom, a substituted or non-substituted alkyl group, a substituted or non-substituted aryl group, a substituted or non-substituted alkylaryl group, -COOR₅, -OCOR₆, a cyano group or a halogen atom, and R₃ and R₄ are capable of forming a ring via a methylene group or an oxymethylene group, and wherein R₅ and R₆ are a substituted or non-substituted alkyl group, a substituted or non-substituted aryl group, or a substituted or non-substituted alkylaryl group.

3. The active oxygen barrier film of claim 1, wherein in the thermoplastic resin (A), has adjacent carbon-carbon double bonds that are separated by at least three methylenes.

4. The active oxygen barrier film of claim 1, wherein the thermoplastic resin (A) has a unit represented by a formula (III): 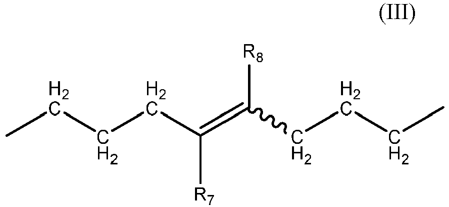 wherein R₇ and R₈ are each independently a hydrogen atom, a substituted or non-substituted alkyl group, a substituted or non-substituted aryl group, a substituted or non-substituted alkylaryl group, -COOR₉, -OCOR₁₀, a cyano group, or a halogen atom, and R₉ and R₁₀ are each independently a hydrogen atom, or an alkyl group having 1 to 10 carbon atoms.

5. The active oxygen barrier film of claim 1, wherein the thermoplastic resin (A) is at least one resin selected from the group consisting of polybutadiene, polyisoprene, polychloroprene, and polyoctenylene.

6. The active oxygen barrier film of claim 1, wherein the transition metal salt (B) is at least one metal salt selected from the group consisting of an iron salt, a nickel salt, a copper salt, a manganese salt and a cobalt salt, and combinations thereof.

7. The active oxygen barrier film of claim 1, wherein the oxygen barrier polymer (C) comprises a polymer selected from the group consisting of polyvinyl alcohol, polyamide, polyvinyl chloride, polyacrylonitrile, ethylene-vinyl alcohol copolymer having an ethylene content of 5 to 60 mol % and a saponification degree of 90 % or more, and combinations thereof.

8. The active oxygen barrier film of claim 1, wherein the oxygen barrier polymer (C) is present in an amount of 70 to 99 weight % and the thermoplastic resin (A) is present in an amount of 30 to 1 weight %, based on the combined weight of the thermoplastic resin (A) and the oxygen barrier polymer (C).

9. The active oxygen barrier film of claim 1, further comprising a compatibilizer (D).

10. The active oxygen barrier film of claim 9, wherein the oxygen barrier polymer (C) is present in an amount of 70 to 98.9 wt %, the thermoplastic resin (A) is present in an amount of 1 to 29.9 weight %, and the compatibilizer (D) is present in an amount of 0.1 to 29 weight %, based on the total weight of the thermoplastic resin (A), oxygen barrier polymer (C), and the compatibilizer (D).

11. The active oxygen barrier film of Claim 1, wherein the iron-based oxygen scavenging composition comprises a mixture of oxidizable iron particles and a carrier resin.

12. The active oxygen barrier film of Claim 1, wherein the film comprises:
(a) at least one active oxygen barrier layer comprising a blend of ethylene vinyl alcohol copolymer and a thermoplastic resin (A) having carbon-carbon double bonds substantially in its main chain, and a transition metal salt (B); and
(b) a layer comprising a mixture of oxidizable iron particles and a carrier resin, and
wherein the film has an oxygen transmission rate of 10 ml·20 µm/(m²·day·atm) or less at 65% RH at 20° C.

13. The active oxygen barrier film of Claim 12, wherein the amount of iron in the layer comprising the mixture of oxidizable iron particles and a carrier resin is from 0.7 to 70 weight percent, based on the total weight of the layer.

14. The multilayer film according to Claim 12, wherein the thickness of the film is between 1.27x10⁻⁵ and 7.62x10⁻⁴m (0.5 and 30 mils).

## Patentansprüche

1. Mehrschicht-Aktivsauerstoffbarrierefilm, der umfasst:
a) zumindest eine Aktivsauerstoffbarriereschicht, die eine Sauerstofffängerzusammensetzung umfasst, die eine Mischung ist aus:
(A) einem thermoplastischen Harz mit Kohlenstoff-Kohlenstoff-Doppelbindungen im Wesentlichen in dessen Hauptkette;
(B) einem Übergangsmetallsalz; und
(C) einem Sauerstoffbarrierepolymer, und
b) eine Schicht, die eine eisenbasierte Sauerstofffängerzusammensetzung umfasst,
wobei der Film eine Sauerstofffängerrate von zumindest 0,01 cm³Sauerstoff pro Tag pro Gramm der Sauerstofffängerzusammensetzungsmischung aufweist.

2. Aktivsauerstoffbarrierefilm nach Anspruch 1, wobei das thermoplastische Harz (A) zumindest eine der durch Formel (I) und Formel (II) dargestellten Einheiten umfasst: 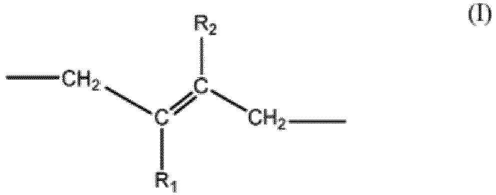 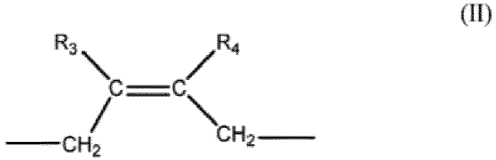 wobei R₁, R₂, R₃ und R₄ gleich oder unterschiedlich, ein Wasserstoffatom, eine substituierte oder unsubstituierte Alkylgruppe, eine substituierte oder unsubstituierte Arylgruppe, eine substituierte oder unsubstituierte Alkylarylgruppe, -COOR₅, -OCOR₆, eine Cyanogruppe oder ein Halogenatom sind und R₃ und R₄ in der Lage sind, einen Ring über eine Methylengruppe oder eine Oxymethylengruppe zu bilden, und wobei R₅ und R₆ eine substituierte oder unsubstituierte Alkylgruppe, eine substituierte oder unsubstituierte Arylgruppe oder eine substituierte oder unsubstituierte Alkylarylgruppe sind.

3. Aktivsauerstoffbarrierefilm nach Anspruch 1, wobei im thermoplastischen Harz (A) benachbarte Kohlenstoff-Kohlenstoff-Doppelbindungen aufweist, die durch zumindest drei Methylene getrennt sind.

4. Aktivsauerstoffbarrierefilm nach Anspruch 1, wobei das thermoplastische Harz (A) eine durch Formel (III) dargestellte Einheit aufweist: 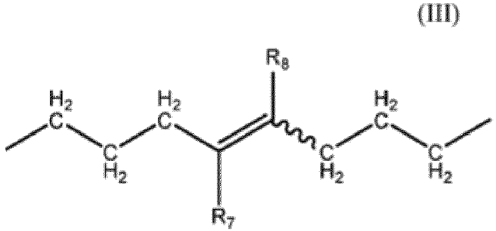 wobei R₇ und R₈ jeweils unabhängig ein Wasserstoffatom, eine substituierte oder unsubstituierte Alkylgruppe, eine substituierte oder unsubstituierte Arylgruppe, eine substituierte oder unsubstituierte Alkylarylgruppe, -COOR₉, -OCOR₁₀, eine Cyanogruppe oder ein Halogenatom sind und R₉ und R₁₀ jeweils unabhängig ein Wasserstoffatom oder eine Alkylgruppe mit 1 bis 10 Kohlenstoffatomen sind.

5. Aktivsauerstoffbarrierefilm nach Anspruch 1, wobei das thermoplastische Harz (A) zumindest ein Harz ist, das aus der Gruppe ausgewählt ist, bestehend aus Polybutadien, Polyisopren, Polychloropren und Polyoctenylen.

6. Aktivsauerstoffbarriere nach Anspruch 1, wobei das Übergangsmetallsalz (B) zumindest ein Metallsalz ist, das aus der Gruppe ausgewählt ist, bestehend aus einem Eisensalz, einem Nickelsalz, einem Kupfersalz, einem Mangansalz und einem Kobaltsalz und Kombinationen davon.

7. Aktivsauerstoffbarrierefilm nach Anspruch 1, wobei das Sauerstoffbarrierepolymer (C) ein Polymer umfasst, das aus der Gruppe ausgewählt ist, bestehend aus Polyvinylalkohol, Polyamid, Polyvinylchlorid, Polyacrylonitril, Ethylenvinylalkoholcopolymer mit einem Ethylengehalt von 5 bis 60 Mol.-% und einem Verseifungsgrad von 90 % oder mehr und Kombinationen davon.

8. Aktivsauerstoffbarrierefilm nach Anspruch 1, wobei das Sauerstoffbarrierepolymer (C) in einer Menge von 70 bis 99 Gew.-% vorhanden ist und das thermoplastische Harz (A) in einer Menge von 30 bis 1 Gew.-% vorhanden ist, bezogen auf das kombinierte Gewicht des thermoplastischen Harzes (A) und des Sauerstoffbarrierepolymers (C).

9. Sauerstoffbarrierefilm nach Anspruch 1, das ferner einen Verträglichkeitsvermittler (D) umfasst.

10. Aktivsauerstoffbarrierefilm nach Anspruch 9, wobei das Sauerstoffbarrierepolymer (C) in einer Menge von 70 bis 98,9 Gew.-% vorhanden ist, das thermoplastische Harz (A) in einer Menge von 1 bis 29,9 Gew.-% vorhanden ist und der Verträglichkeitsvermittler (D) in einer Menge von 0,1 bis 29 Gew.-% vorhanden ist, bezogen auf das Gesamtgewicht des thermoplastischen Harzes (A), des Sauerstoffbarrierepolymers (C) und des Verträglichkeitsvermittlers (D).

11. Aktivsauerstoffbarrierefilm nach Anspruch 1, wobei die eisenbasierte Sauerstofffängerzusammensetzung eine Mischung von oxidierbaren Eisenpartikeln und einem Trägerharz umfasst.

12. Aktivsauerstoffbarrierefilm nach Anspruch 1, wobei der Film umfasst:
(a) zumindest eine Aktivsauerstoffbarriereschicht, die eine Mischung aus Ethylenvinylalkoholcopolymer und einem thermoplastischen Harz (A) mit Kohlenstoff-Kohlenstoff-Doppelbindungen im Wesentlichen in dessen Hauptkette und einem Übergangsmetallsalz (B) umfasst; und
(b) eine Schicht, die eine Mischung von oxidierbaren Eisenpartikeln und einem Trägerharz umfasst, und
wobei der Film bei 65 % rF bei 20 °C eine Sauerstoffübertragungsrate von 10 ml·20 µm/(m²·Tag·atm) oder weniger aufweist.

13. Aktivsauerstoffbarrierefilm nach Anspruch 12, wobei die Eisenmenge in der Schicht, die die Mischung von oxidierbaren Eisenpartikeln und einem Trägerharz umfasst, bezogen auf das Gesamtgewicht der Schicht 0,7 bis 70 Gew.-% beträgt.

14. Mehrschichtfilm nach Anspruch 12, wobei die Dicke des Films zwischen 1·27 x 10⁻⁵ und 7,62 x 10⁻⁴m (0,5 und 30 mil) liegt.

## Revendications

1. Film multicouche de barrière active contre l'oxygène, comprenant :
a) au moins une couche active de barrière contre l'oxygène comprenant une composition éliminatrice d'oxygène qui est un mélange de :
(A) une résine thermoplastique possédant des liaisons doubles carbone-carbone sensiblement dans sa chaîne principale ;
(B) un sel de métal de transition ; et
(C) un polymère de barrière contre l'oxygène, et
b) une couche comprenant une composition à base de fer éliminatrice d'oxygène,
dans lequel le film possède un taux d'élimination d'oxygène qui est au moins 0,01 cc d'oxygène par jour par gramme du mélange de composition éliminatrice d'oxygène.

2. Film de barrière active contre l'oxygène selon la revendication 1, dans lequel la résine thermoplastique (A) comprend au moins l'une des unités représentées par la formule (I) et la formule (II) : 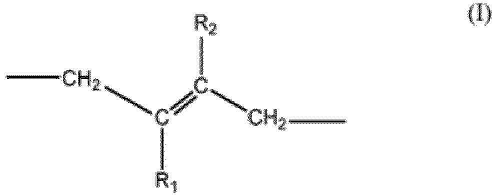 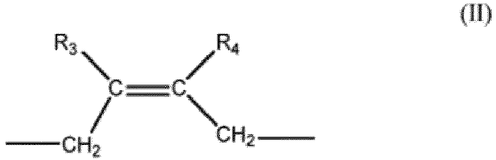 dans lequel R₁, R₂, R₃ et R₄ sont les mêmes ou différents, un atome d'hydrogène, un groupe alkyle substitué ou non substitué, un groupe aryle substitué ou non substitué, un groupe alkylaryle substitué ou non substitué, -COOR₅, - OCOR₆, un groupe cyano ou un atome d'halogène, et R₃ et R₄ sont capables de former un anneau par l'intermédiaire d'un groupe méthylène ou d'un groupe oxyméthylène, et dans lequel R₅ et R₆ sont un groupe alkyle substitué ou non substitué, un groupe aryle substitué ou non substitué, ou un groupe alkylaryle substitué ou non substitué.

3. Film de barrière active contre l'oxygène selon la revendication 1, dans lequel dans la résine thermoplastique (A), possède des liaisons doubles carbone-carbone adjacentes qui sont séparées par au moins trois méthylènes.

4. Film de barrière active contre l'oxygène selon la revendication 1, dans lequel la résine thermoplastique (A) possède une unité représentée par une formule (III) : 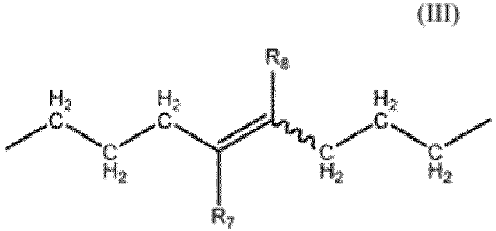 dans lequel R₇ et R₈ sont chacun indépendamment un atome d'hydrogène, un groupe alkyle substitué ou non substitué, un groupe aryle substitué ou non substitué, un groupe alkylaryle substitué ou non substitué, -COOR₉, -OCOR₁₀, un groupe cyano, ou un atome d'halogène, et R₉ et R₁₀ sont chacun indépendamment un atome d'hydrogène, ou un groupe alkyle possédant 1 à 10 atomes de carbone.

5. Film de barrière active contre l'oxygène selon la revendication 1, dans lequel la résine thermoplastique (A) est au moins une résine sélectionnée parmi le groupe constitué de : polybutadiène, polyisoprène, polychloroprène, et polyocténylène.

6. Film de barrière active contre l'oxygène selon la revendication 1, dans lequel le sel de métal de transition (B) est au moins un sel de métal sélectionné parmi le groupe constitué d'un sel de fer, d'un sel de nickel, d'un sel de cuivre, d'un sel de manganèse et d'un sel de cobalt, et d'associations de ceux-ci.

7. Film de barrière active contre l'oxygène selon la revendication 1, dans lequel le polymère de barrière contre l'oxygène (C) comprend un polymère sélectionné parmi le groupe constitué d'alcool de polyvinyle, de polyamide, de chlorure de polyvinyle, de polyacrylonitrile, de copolymère d'alcool d'éthylène-vinyle possédant une teneur en éthylène de 5 à 60 % molaire et un degré de saponification de 90 % ou plus, et d'associations de ceux-ci.

8. Film de barrière active contre l'oxygène selon la revendication 1, dans lequel le polymère de barrière contre l'oxygène (C) est présent en une quantité de 70 à 99 % pondéral et la résine thermoplastique (A) est présente en une quantité de 30 à 1 % pondéral, sur la base du poids combiné de la résine thermoplastique (A) et du polymère de barrière contre l'oxygène (C).

9. Film de barrière active contre l'oxygène selon la revendication 1, comprenant en outre un compatibiliseur (D).

10. Film de barrière active contre l'oxygène selon la revendication 9, dans lequel le polymère de barrière contre l'oxygène (C) est présent en une quantité de 70 à 98,9 % pondéral, la résine thermoplastique (A) est présente en une quantité de 1 à 29,9 % pondéral, et le compatibiliseur (D) est présent en une quantité de 0,1 à 29 % pondéral, sur la base du poids total de la résine thermoplastique (A), du polymère de barrière contre l'oxygène (C), et du compatibiliseur (D).

11. Film de barrière active contre l'oxygène selon la revendication 1, dans lequel la composition à base de fer éliminatrice d'oxygène comprend un mélange de particules de fer oxydables et d'une résine porteuse.

12. Film de barrière active contre l'oxygène selon la revendication 1, dans lequel le film comprend :
(a) au moins une couche active de barrière contre l'oxygène comprenant un mélange de copolymère d'alcool d'éthylène-vinyle et d'une résine thermoplastique (A) possédant des liaisons doubles carbone-carbone sensiblement dans sa chaîne principale, et un sel de métal de transition (B) ; et
(b) une couche comprenant un mélange de particules de fer oxydables et d'une résine porteuse, et
dans lequel le film possède un taux de transmission d'oxygène de 10 ml·20 µm/(m²·jour·atm) ou moins à 65 % d'HR à 20° C.

13. Film de barrière active contre l'oxygène selon la revendication 12, dans lequel la quantité de fer dans la couche comprenant le mélange de particules de fer oxydables et d'une résine porteuse est de 0,7 à 70 pour cent pondéral, sur la base du poids total de la couche.

14. Film multicouche selon la revendication 12, dans lequel l'épaisseur du film est entre 1,27x10⁻⁵ et 7,62x10⁻⁴m (0,5 et 30 mils).
